# EUROPEAN PATENT SPECIFICATION

(11) **EP 1 775 261 B1**
(45) Date of publication and mention of the grant of the patent: **04.08.2010**
(21) Application number: 05425714.2
(22) Date of filing: 11.10.2005
(51) Int. Cl.: C01B 31/02, C08K 7/24, C08K 3/04, B01J 31/06, B01J 31/28

(54) **Synthesis of carbon nanotubes and/or nanofibres on a polymer substrate**
Synthese von Kohlenstoffnanoröhren und/oder Nanofasern auf einem Polymersubstrat
Synthèse de nanotubes et/ou de nanofibres de carbone sur un substrat polymère

(43) Date of publication of application: 18.04.2007
(73) Proprietor: Fibre e Tessuti Speciali S.p.A., 10077 San Maurizio Canavese (IT)
(72) Inventor: Mezzo, Luca, I-10076 Nole (Torino ) (IT); Gaio, Andrea, I-10090 Rosta ( Torino) (IT); Cesano, Federico, I-10091 Alpignano ( Torino ) (IT); Scarano, Domenica, I-10141 Torino (IT); Zecchina, Adriano, I-10125 Torino (IT)
(74) Representative: Gerbino, Angelo

(56) References cited:
- HOFMANN S ET AL: "DIRECT GROWTH OF ALIGNED CARBON NANOTUBE FIELD EMITTER ARRAYS ONTO PLASTIC SUBSTRATES" APPLIED PHYSICS LETTERS, AIP, AMERICAN INSTITUTE OF PHYSICS, MELVILLE, NY, US, vol. 83, no. 22, 1 December 2003 (2003-12-01), pages 4661-4663, XP001193201 ISSN: 0003-6951
- PATENT ABSTRACTS OF JAPAN vol. 2003, no. 12, 5 December 2003 (2003-12-05) & JP 2005 158686 A (SAMSUNG SDI CO LTD), 16 June 2005 (2005-06-16)
- DATABASE WPI Section Ch, Week 200557 Derwent Publications Ltd., London, GB; Class A26, AN 2005-563967 XP002372564 & WO 2005/068556 A1 (NAT INST ADVANCED IND SCI & TECHNOLOGY) 28 July 2005 (2005-07-28)
- DUCATI CATERINA ET AL: "Temperature selective growth of carbon nanotubes by chemical vapor deposition" JOURNAL OF APPLIED PHYSICS, AMERICAN INSTITUTE OF PHYSICS. NEW YORK, US, vol. 92, no. 6, 15 September 2002 (2002-09-15), pages 3299-3303, XP012057271 ISSN: 0021-8979

## Description

The present invention relates to a method by means of which carbon nanotubes and/or nanofibres are associated with the surface of a polymer substrate so as to produce a composite material.

The polymer substrate is selected from the group consisting of polybenzoxazoles, polybenzimidazoles, polyimides, and polyaramides and is advantageously resistant to oxidation and to heat as well as having a tensile strength of at least 700 MPa, measured in accordance with ASTM Standard D-885.

The nanotubes referred to within the scope of the present invention may be either of the single-wall type (SWCNTs) or of the multi-wall type (MWCNTs). A single-wall nanotube (SWCNT) is constituted by a single nanotube with only one wall of graphene structure (densely packed hexagonal rings at the vertices of which are sp² hybridized carbon atoms). A multi-wall nanotube (MWCNT) is constituted by a series of concentric nanotubes, that is to say, they have a series of parallel walls. All of the nanotubes are characterized by good thermal and chemical resistance and by excellent mechanical properties by virtue of the fact that they are closed elements and hence without edges. These properties vary with variations in the presence of defects within the nanotube or nanotubes (for example, breakages, the presence of rings with a number of carbon atoms/vertices other than 6). The greater these defects are, the lower the mechanical and thermal properties of the nanotube will therefore be.

As far as the mechanical properties are concerned, SWCNTs have an elastic modulus under tension of the order of 1,000 GPa (whereas the carbon-graphite fibre that is conventionally available has values of between 280 and 650 GPa) and a tensile strength of about 30,000 MPa (whereas the conventional carbon-graphite fibre has values between 2,500 and 5,600 MPa). SWCNTs also have very low electrical conductivity which can be regulated by the chirality of the nanotube (defined as the orientation of the hexagons with respect to the axis of the nanotube) from 0 eV (metal character) to 0.4 - 0.7 eV (semiconductor character), as well as resistance to oxidation which is better than the corresponding values of conventionally available carbon graphite fibres.

Carbon nanotubes have been found extremely attractive with a view to their use as reinforcing "fillers" for other materials such as, for example, polymers, fibres, etc., as well as for forming structural or functional composite materials.

Amongst these applications, that according to which carbon nanotubes and/or nanofibres are associated with the surface of organic polymers that are resistant to oxidation has been found particularly promising.

HOFMANN S ET AL, AMERICAN INSTITUTE OF PHYSICS, MELVILLE, NY, US, vol. 83, no. 22, 1 December 2003, pages 4661-4663, XP001193201 discloses a composite material containing carbon nanotubes and polyimide as substrate/matrix therefor.

According to a known technique, carbon nanotubes and/or nanofibres are synthesized on an intermediate substrate (e.g. zeolites) and are then separated from that substrate and subsequently mixed with granules or powders of a polymer which is resistant to oxidation. This method is therefore lengthy and complex since it requires the use of an intermediate substrate which then has to be separated from the materials which are actually of interest.

To overcome this disadvantage of the known technique, the subject of the present invention is a method which provides for the deposition on the surface of the polymer substrate of at least one metal belonging to one of groups Ib to VIIIb of the Periodic Table of Elements, which metal has catalytic properties with respect to the formation and the development of the carbon nanotubes and/or nanofibres, and the placing of the substrate in contact with a gas comprising at least one component the molecule of which contains at least one carbon atom, at a temperature of between 400 and 900°C, so as to bring about synthesis of carbon nanotubes and/or nanofibres on the surface of the polymer substrate.

In the implementation of the method of the invention, the concentration and the level of growth of nanotubes and nanofibres on the surface of the polymer substrate can be varied appropriately according to the properties to be obtained. For example, if the objective is to increase the surface area of the substrate in polymer granule form, then the concentration and the level of growth of nanotubes and/or nanofibres will be quite limited. If, on the other hand, it is desired to create a layer of nanotubes and/or nanofibres which acts as a physical, chemical or thermal barrier with respect to the polymer substrate, the concentration, the growth level, and consequently the density of the group of nanotubes and/or nanofibres will be much greater.

The synthesis of nanotubes and/or nanofibres on the surface of the polymer substrate improves its mechanical and/or functional properties both with a view to subsequent processes (for example spinning, extrusion) and with a view to the production of novel products as a result of such transformations (for example, fibres, yarns and films).

More particularly, at fine structure level, it is possible to obtain micro-structural composite materials, that is, a material formed by two or more different crystals or phases, or molecular structures, as well as macro-structural composite materials, that is, a material formed by different macro-constituents which are chemically different from one another and substantially insoluble in one another (for example, para-aramide fibre or polymer reinforced by nanotubes dispersed within it).

The presence of nanotubes and/or nanofibres which are synthesized directly on the surface of a substrate in granule form facilitates subsequent processing or transformation of the granules into fibre or films, for example, extrusion, by facilitating the sliding of the granules and of the polymer powders both relative to one another and relative to a fixed wall, for example, of an extruder. In this case, the nanotubes and/or nanofibres act as lubricants between the granules and between the macromolecular chains of the polymer itself.

The method of the invention has also been found useful with a view to the production of innovative composite materials.

Examples of these are structural composite materials having a matrix with a reinforcement constituted by a filler or by a fibre (for example, a fabric of para-aramide fibre on the surface of which nanotubes or nanofibres impregnated with a thermosetting matrix have been synthesized). Further examples are functional composite materials which have a matrix with an element having a predetermined functionality (for example, a fabric of para-aramide fibre on the surface of which nanotubes and/or nanofibres have been synthesized in order to provide greater electrical conductivity). Other examples are composite structures comprising a structural element constituted by two or more elements assembled in a well-defined geometrical shape (for example, two or more layers of para-aramide fibre fabric on the surface of which have been synthesized nanotubes and/or nanofibres impregnated with a thermosetting matrix or joined together by a third component - such as a honeycomb - so as to form a sandwich structure).

The metal having catalytic properties which is used in the method of the invention may advantageously be selected from the group consisting of Fe, Co, Ni, Ru, Rh, Pd, Os, Ir, Pt, and mixtures thereof. The metal may, however, also belong to any one of groups Ib to VIIIb of the Periodic Table of Elements.

Before the deposition step, the substrate may be subjected to a pre-treatment having the purpose of eliminating surface impurities and/or increasing surface area.

The elimination of the surface impurities can be achieved by washing with a solution of water and surfactants or with an ultrasound bath, whereas an increase in surface area can be achieved by subjecting the polymer substrate to moderate oxidation in air or in an atmosphere saturated with water vapour and/or carbon dioxide, or to acid or basic chemical, electrochemical, or plasma attack, or the like.

This optional surface pre-treatment may equally well take place continuously or discontinuously.

In a preferred embodiment of the method of the invention, the step of the deposition of the at least one metal on the surface of the substrate provides for the successive stages of impregnation of the substrate with a mixture of a solvent and a salt of the metal, evaporation of the solvent from the substrate which remains impregnated with the salt, calcination of the substrate so that the salt is converted into the corresponding oxide, and reduction of the oxide to metal. All of the various above-mentioned stages can take place continuously or discontinuously.

The above-mentioned mixture may be a solution or dispersion of the salt in an aqueous or organic solvent and may have a salt concentration, calculated as moles of the corresponding metal, of between 0.01 M and 2 M.

The calcination may take place by exposure to air at a temperature of between 100 and 450°C.

The reduction may take place by exposure to a reducing atmosphere comprising, for example, ammonia and/or hydrogen, at a temperature of between 300 and 700°C.

Alternatively, the step of the deposition of the at least one metal on the surface of the substrate provides for the placing of the substrate in contact with a solution of a solvent and a metal (optionally also containing surfactants, dispersants, etc., suitable for facilitating the dispersal of the metal in the solvent), the subjection of the solution to electrolysis with the use of the substrate as the cathode, and subsequent evaporation of the solvent.

According to a further embodiment of the invention, the step of the deposition of the metal on the surface of the substrate takes place by the sublimation of the metal thereon under high vacuum. Alternatively, the deposition may also take place by the delivery onto the substrate of a metallo-organic precursor such as, for example, ferrocene, which is susceptible to decomposition, forming the metal. The delivery of the precursor may take place prior to and/or simultaneously with that of the gas comprising at least one component each molecule of which contains at least one carbon atom.

This latter component is selected, for example, from the group consisting of the aromatic and aliphatic hydrocarbons - preferably ethylene, methane and acetylene - carbon dioxide, carbon monoxide, and mixtures thereof. The gas may also contain hydrogen and/or nitrogen. The gas may be at substantially any pressure, for example, at a pressure within the range between 10⁻⁶ and 20 bar.

The step of the synthesis of nanotubes and/or nanofibres may take place in a gas flow so as to permit contact between the gas and the metal/s, or by blowing the gas in until the reaction environment is saturated and then interrupting the flow and leaving the gas to interact with the metal. The time required for the synthesis reaction - calculated from the time when the temperature of the reacting system reaches 400°C - is typically between a few minutes and several hours in both cases.

The presence of metal particles on the surface of the polymer substrate causes the growth of carbon nanotubes outwardly from that surface. The direction of growth of the various nanotubes may be random or may be partially orderly according to whether or not the reaction environment is subjected to the action of electric and/or magnetic fields. Since the metal particles are nanomagnets, they are oriented within these fields, thus giving rise to an oriented and/or orderly growth of nanotubes.

The reaction gas may or may not undergo pre-heating prior to being delivered into the reaction environment.

The reaction can be interrupted by cooling of the reaction environment to temperatures below 200°C and/or by supplying one or more inert gases, for example, nitrogen and/or argon, until the reaction environment is saturated. These latter two options can both be used in any order or only one of them may be used.

The heating to the reaction temperature, as well as the cooling upon completion of the reaction may take place at any rate which does not compromise the properties of the materials present in the reaction system.

Regulation, as desired, of the type and quality of the metal/s used, the composition and the pressure of the gas, as well as the reaction temperature and time, permits the achievement of growth levels and concentrations of nanotubes and/or nanofibres of between 5% and 1000% by weight, relative to the weight of the starting polymer substrate.

Upon completion of the step of the synthesis of the nanotubes and/or nanofibres on the surface of the polymer substrate, the metal remaining thereon can be removed, for example, by acid attack with hydrochloric acid.

The polymer substrate on which the method of the invention is performed may be of the film, particle, or fibrous type.

A particle-type substrate may be constituted by granules and/or powders having a mean particle size, for example, of between 0.001 and 5 mm. A fibrous substrate may be a two-dimensional substrate such as non-woven fabric, orthogonal fabric, unidirectional fabric, multiaxial fabric, ribbon fabric, braided fabric, cord fabric, warp and weft jersey fabric, a combination of several two-dimensional substrates so as to form a three-dimensional substrate, or a three-dimensional fabric.

By utilizing the capability to regulate the above-indicated reaction parameters, the concentration and growth level of nanotubes and/or nanofibr es on the surface of the polymer fibre can be varied according to the final properties to be obtained in a composite material including a matrix in addition to fibres coated with nanotubes and/or nanofibres. If it is desired to improve matrix/fibre adhesion, the concentration and the growth level of nanotubes and/or nanofibres on the surface of the fibre will be limited; if, however, it is desired to have a direct structural contribution by the assembly of nanotubes and/or nanofibres, the growth level of the latter will be greater, up to the extreme case in which it is the assembly of nanotubes and/or nanofibres which, as a result of their intertwining during the synthesis step, becomes the matrix.

For example, "short" fibres and two-dimensional and/or three-dimensional fibrous structures of polymers on the surface of which nanotubes and/or nanofibres are synthesized in quantities up to 20% by weight (calculated in relation to the weight of the starting fibre) can be used as reinforcing and structural fillers of thermoplastic, thermosetting and elastomeric matrices. In this case, use is made of the greater surface area of the assembly of nanotubes and/or nanofibres relative to the surface of the "raw" fibres or fibres treated with more conventional systems such as plasma.

If, on the other hand, the growth level of nanotubes and/or nanofibres is greater than 20% by weight (again calculated in relation to the weight of the starting fibre), the excess of nanotubes and/or nanofibres which is not anchored to the fibrous surface can migrate and disperse more or less uniformly within the matrix and provide an additional structural contribution to the matrix. In this case, the nanotubes and/or nanofibres thus have a dual advantage: on the one hand, greater surface adhesion between fibre and matrix (provided by nanotubes and/or nanofibres anchored to the surface of the fibre) and, on the other hand, a structural reinforcement of the matrix (nanotubes and/or nanofibres dispersed within the matrix).

When the growth level of nanotubes and/or nanofibres is markedly greater than 20%, they constitute the matrix of the final composite material which will thus be constituted by polymer reinforcing fibres incorporated in such a matrix. These particular composite materials can then be coupled, for example, by conventional gluing techniques, with other materials which may or may not be of the same type (such as ceramic materials - alumina), typically to act as antiballistic protections in which the strengths of all of the various constituent materials are added together.

Irrespective of the preselected level of growth of nanotubes and/or nanofibres, polymer fibres already reinforced by nanotubes and/or nanofibres and produced, for example , by extrusion or spinning of polymer granules on the surface of which nanotubes and/or nanofibres have been synthesized can also be used as fibrous reinforcement.

According to another embodiment of the invention, the polymer substrate on the surface of which carbon nanotubes and/or nanofibres have been synthesized in accordance with the methods described above is subjected to pyrolysis at a temperature greater than 800°C so that the substrate is transformed into graphite to give a carbon/carbon composite material.

Composite (C/C) materials are used mainly as friction materials (brakes and clutches) printing rollers, structural parts of centrifuges, and containers for the heat treatment of metals.

Currently, these composite materials are formed basically by a reinforcement constituted by graphite fibres arranged in an orderly manner (crystalline), held together by an amorphous graphite matrix. In some cases (e.g. for friction materials) the additional presence of carbides (substantially silicon carbides) is provided for. At the moment, the techniques used for the production of C/C composites are substantially of two types.

The first type involves impregnating carbon fibres with thermosetting resins (mainly phenolic resins), producing a first carbon-resin structural composite material which undergoes a subsequent pyrolysis cycle in a furnace (at 1,800-2,000°C in an inert atmosphere, usually argon or nitrogen) in order to transform the resin into graphite carbon. This series of impregnation, cross-linking, and pyrolysis cycles is repeated about 4-5 times.

The second type, which is known as chemical vapour infiltration (CVI), involves the provision of fibres of carbon or of a precursor thereof (for example, polyacrylonitrile) which is subsequently pyrolized, and then the infiltration of hydrocarbon gases (normally ethylene) at high temperature (1,100 - 1,500°C) to decompose the gas into amorphous graphite around the crystalline carbon fibre.

Both of these techniques require very long times - of the order of weeks - and very high temperatures - which may even be greater than 1,800°C - which, in contrast, are avoided by the method of the invention which permits the production of similar C/C composites in which the amorphous graphite matrix is replaced by a matrix of nanotubes and/or nanofibres.

The pyrolysis step is advantageously preceded or followed by a step for removal of the metal remaining from the preceding steps, which could contaminate the C/C composite produced. This removal may be performed, for example, by acid attack with hydrochloric acid.

The composite material thus obtained may optionally be subjected to further gaseous infiltration treatments in order to make it denser, and/or surface synthesis of carbides to increase its hardness and/or thermal, chemical, and abrasion resistance.

Further advantages and characteristics of the present invention will become clear from the following non-limiting examples.

### Example 1 - synthesis of carbon nanotubes on para-aramide polymer powder

Para-aramide polymer powder commercially available under the name of Twaron® 5011, the chemical name of which is polyparaphenylene terephthalamide and which can be produced as a result of the synthesis of paraphenylene diamine (PPD) with terephthalic acid chloride (TDC), was used as the polymer substrate. This para-aramide polymer has the formula: 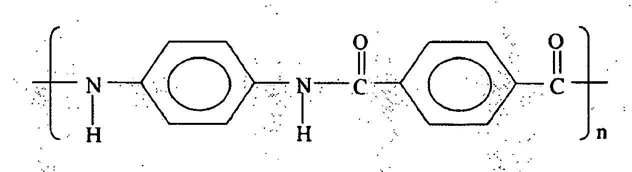 in which n is approximately 20.

Powder of this polymer was first impregnated with a solution containing 0.1 M Ni(NO₃)₂*6H₂O (nickel nitrate hexahydrate) in ethanol. The solvent was then evaporated at ambient temperature and pressure.

During this stage the powder changed from a straw-yellow coloration prior to impregnation to a brown/bronze coloration after impregnation and evaporation of the solvent; this darker coloration was due to the presence of the nickel salt on the surface of the polymer powder.

The powder thus impregnated was dried in an oven at 100-110°C for about 120 minutes.

The powder was then subjected to calcination in air at 300°C for 300 minutes so that the nickel salt was transformed into oxide, and was then exposed to a flow of hydrogen at 400°C for about 15' (100 ml/min flow with a temperature-increase ramp of 5°C/min); during this last stage the oxide was transformed into metallic Ni.

The polymer powder thus treated was subjected to the process for the synthesis of nanotubes on its surface. In particular, tests were carried out in the presence of a mixture of ethylene and hydrogen in a 1:4 volumetric ratio and a flow of the gas mixture of 125 ml/min at atmospheric pressure, at temperatures of 500°C, 550°C and 600°C, respectively. In all of these tests, the polymer was kept for 60 minutes at the temperatures given, to which it was brought at a temperature-increase rate of 5°C/min.

The reaction was terminated at the 60th minute by interrupting the flow of the reactive gases and introducing nitrogen into the reaction environment at atmospheric pressure with a flow of 100 ml/min and with a temperature-reduction rate of 10°C/min.

The growth of nanotubes achieved - measured in relation to the weight of the starting polymer - was 0.2% at the temperature of 500°C, 40% at the temperature of 550°C and 200% at the temperature of 600°C, respectively.

The starting polymer did not show particular signs of degradation in any of the tests performed.

### Example 2 - synthesis of nanotubes on para-aramide fibre

Para-aramide fibre commercially available under the name of Twaron® 3360 dTex type 1000, from which the surface sizing was removed by conventional washing treatment, was used as the polymer substrate.

The fibre was first impregnated with an 0.1M solution of Ni(NO₃)₂*6H₂O (nickel nitrate hexahydrate) in ethanol. The solvent was then evaporated at ambient temperature and pressure.

During this st age, the fibre changed from a straw-yellow coloration prior to impregnation to a brown/bronze coloration after impregnation and evaporation of the solvent; this darker coloration was due to the presence of the nickel salt on the surface of the polymer.

The fibre thus impregnated was dried in an oven at 100-110°C for about 120 minutes.

The fibre was then subjected to calcination in air at 300°C for 300 minutes so that the nickel salt was transformed into oxide, and was then exposed to a flow of hydrogen at 400°C for about 15' (100 ml/min flow with a temperature-increase ramp of 5°C/min); during this last stage the oxide was transformed into metallic Ni.

The fibre thus treated was subjected to the process for the synthesis of nanotubes on its surface. In particular, tests were carried out in the presence of a mixture of ethylene and hydrogen in a 1:4 volumetric ratio and a flow of the gas mixture of 125 ml/min at atmospheric pressure at temperatures of 500°C, 550°C and 600°C, respectively. In all of these tests, the polymer was kept for 60 minutes at the temperatures given, to which it was brought at a temperature-increase rate of 5°C/min.

The reaction was terminated at the 60th minute by interrupting the flow of the reactive gases and introducing nitrogen into the reaction environment at atmospheric pressure with a flow of 100 ml/min and with a temperature reduction rate of 10°C/min.

The growth of nanotubes achieved - measured in relation to the weight of the starting polymer - was 6% at the temperature of 500°C, 230% at the temperature of 550°C and 400% at the temperature of 600°C, respectively.

The starting polymer did not show particular signs of degradation in any of the tests performed.

### Example 3 - synthesis of nanotubes on fabric based on para-aramide fibre

A 300 g/m² fabric based on Twaron® 3360 dTex type 1000 fibre which is generally available commercially under the name of T 751 and from which the surface sizing was removed by conventional washing treatment, was used as the polymer substrate.

The fibre of this fabric was first impregnated with an 0.1M solution of Ni(NO₃)₂*6H₂O (nickel nitrate hexahydrate) in ethanol. The solvent was then evaporated at ambient temperature and pressure.

During this stage, the fibre changed from a straw-yellow coloration prior to impregnation to a brown/bronze coloration after impregnation and evaporation of the solvent, showing that the fibre had been impregnated well by the nickel salt.

The fibre thus impregnated was dried in an oven at 100-110°C for about 120 minutes.

The fibre was then subjected to calcination in air at 300°C for 300 minutes so that the nickel salt was transformed into oxide and was then exposed to a flow of hydrogen at 400°C for about 15' (100 ml/min flow with a temperature-increase ramp of 5°C/min); during this last stage the oxide was reduced to metallic Ni.

The fibre thus treated was subjected to the process for the synthesis of nanotubes on its surface. In particular, tests were carried out in the presence of a mixture of ethylene and hydrogen in a 1:4 volumetric ratio and a flow of the gas mixture of 125 ml/min at atmospheric pressure at temperatures of 500°C, 550°C and 600°C, respectively. In all of these tests, the polymer was kept for 60 minutes at the temperatures given, to which it was brought with a temperature-increase ramp of 5°C/min.

The reaction was terminated at the 60th minute by interrupting the flow of the reactive gases and introducing nitrogen into the reaction environment at atmospheric pressure with a flow of 100 ml/min and with a temperature-reduction rate of 10°C/min.

The growth of nanotubes achieved - measured with respect to the weight of the starting polymer - was 8% at the temperature of 500°C, 240% at the temperature of 550°C and 450% at the temperature of 600°C, respectively.

The starting polymer did not show particular signs of degradation in any of the tests performed.

### Example 4 - Pyrolysis of para-aramide fibre after synthesis of carbon nanotubes on its surface

The composite materials obtained upon completion of the various tests of Example 3 were subjected to thermal cycles of 800°C for 5 hours in a nitrogen atmosphere.

As a result of X-ray analysis it was established that the level of graphitization reached in all of the tests was comparable with that of a carbon fibre normally commercially available under the trade mark Tenax®.

Moreover, there was not found to be any contribution to the graphitization due to the presence of the catalyst remaining after the synthesis of the nanotubes.

Naturally, the principle of the invention remaining the same, the details of implementation and forms of embodiment may be varied widely with respect to those described purely by way of example, without thereby departing from the scope claimed.

## Claims

1. A method for the synthesis of carbon nanotubes and/or nanofibres on the surface of a polymer substrate selected from the group consisting of polybenzoxazoles, polybenzimidazoles, polyimides, polyaramides and mixtures thereof, the method comprising the steps of:
- depositing on the surface of the substrate at least one metal belonging to one of groups Ib to VIIIb of the Periodic Table of Elements, which metal has catalytic properties with respect to the formation and the development of the carbon nanotubes and/or nanofibres, and
- placing the substrate in contact with a gas comprising at least one component the molecule of which contains at least one carbon atom, at a temperature of between 400 and 900°C, so as to bring about the synthesis of carbon nanotubes and/or nanofibres on the surface of the polymer substrate.

2. A method according to Claim 1 in which the metal is selected from the group consisting of Fe, Co, Ni, Ru, Rh, Pd, Os, Ir, Pt and mixtures thereof.

3. A method according to any one of the preceding claims in which the step of depositing the metal on the surface of the substrate provides for the successive stages of:
- impregnation of the substrate with a mixture of a solvent and a salt of the metal,
- evaporation of the solvent from the substrate which remains impregnated with the salt,
- calcination of the substrate so that the salt is converted into the corresponding oxide, and
- reduction of the oxide to metal.

4. A method according to Claim 3 in which the mixture is a solution or dispersion of the salt in an aqueous or organic solvent.

5. A method according to Claim 4 in which the solution has a salt concentration, calculated as molest of the corresponding metal, of between 0.01 M and 2 M.

6. A method according to any one of Claims 3 to 5 in which the calcination takes place by exposure to air at a temperature between 100 and 450°C.

7. A method according to any one of Claims 3 to 6 in which the reduction takes place by exposure to a reducing atmosphere at a temperature of between 300 and 700°C.

8. A method according to Claim 7 in which the reducing atmosphere comprises ammonia and/or hydrogen.

9. A method according to Claim 1 or Claim 2 in which the step of depositing the metal on the surface of the substrate provides for the placing of the substrate in contact with a solution of a solvent and of the metal, the subjection of the solution to electrolysis with the use of the substrate as cathode, and subsequent evaporation of the solvent.

10. A method according to Claim 1 or Claim 2 in which the step of depositing the metal on the surface of the substrate takes place by sublimation of the metal under high vacuum.

11. A method according to Claim 1 or Claim 2 in which the step of depositing the metal on the surface of the substrate takes place by the delivery onto the substrate of a metallo-organic precursor which is susceptible to decomposition, forming the metal.

12. A method according to any one of the preceding claims in which the component of the gas the molecule of which contains at least one carbon atom is selected from the group consisting of the aromatic and aliphatic hydrocarbons preferably ethylene, methane and acetylene - carbon dioxide, carbon monoxide, and mixtures thereof.

13. A method according to Claim 12 in which the gas also contains hydrogen and/or nitrogen.

14. A method according to any one of the preceding claims in which, upon completion of the synthesis of carbon nanotubes and/or nanofibres, the metal remaining on the substrate is removed.

15. A method according to any one of the preceding claims in which, prior to the deposition step, the substrate is subjected to a pre-treatment having the purpose of removing surface impurities and/or increasing surface area.

16. A method according to any one of the preceding claims in which the substrate is of the film, particle or fibrous type.

17. A method according to Claim 16 in which the particle substrate is constituted by granules and/or powders having a mean particle size of between 0.001 and 5 mm.

18. A method according to Claim 16 in which the fibrous substrate is a two-dimensional substrate such as non-woven fabric, orthogonal fabric, unidirectional fabric, multiaxial fabric, ribbon fabric, braided fabric, cord fabric, warp and weft jersey fabric, a combination of several two-dimensional substrates so as to form a three-dimensional substrate, or a three-dimensional fabric.

19. A method according to any one of the preceding claims in which the polymer substrate on the surface of which the carbon nanotubes and/or nanofibres have been synthesized is subjected to pyrolysis at a temperature greater than 800°C so that the substrate is transformed into.graphite to produce a carbon/carbon composite material.

20. A method according to Claim 19 in which the pyrolysis step is preceded and/or followed by a step for removal of the metal remaining from the preceding steps.

## Patentansprüche

1. Verfahren zur Synthese von Kohlenstoff-Nanoröhren und/oder
- Nanofasern auf einem Polymersubstrat, das aus der Gruppe ausgewählt ist, die aus Polybenzoxazolen, Polybenzimidazolen, Polyimiden, Polyaramiden und Gemischen von diesen besteht, wobei das Verfahren die Schritte aufweist.
- Aufbringen auf die Oberfläche des Substrats wenigstens eines Metalls, das zu einer der Gruppen Ib bis VIIIb des Periodensystems der Elemente gehört, wobei das Metall katalytische Eigenschaften in Bezug auf die Bildung und die Entwicklung der Kohlenstoff-Nanoröhren und/oder -Nanofasern aufweist, und
- Bringen des Substrats in Kontakt mit einem Gas, das wenigstens eine Komponente aufweist, von der das Molekül wenigstens ein Kohlenstoffatom enthält, bei einer Temperatur zwischen 400 und 900°C, um so die Synthese von Kohlenstoff-Nanoröhren und/oder -Nanofasern auf der Oberfläche des Polymersubstrates herbeizuführen.

2. Verfahren nach Anspruch 1, in dem das Metall aus der Gruppe ausgewählt ist, die aus Fe, Co, Ni, Ru, Rh, Pd, Os, Ir, Pt und deren Gemischen besteht.

3. Verfahren nach einem beliebigen der vorhergehenden Ansprüche, in dem der Schritt des Aufbringens des Metalls auf der Oberfläche des Substrates die aufeinander folgenden Stufen vorsieht:
- Imprägnieren des Substrates mit einem Gemisch aus einem Lösungsmittel und einem Salz des Metalls,
- Verdampfen des Lösungsmittels aus dem Substrat, das mit dem Salz imprägniert bleib,
- Kalzinieren des Substrates, so dass das Salz in das entsprechende Oxid umgesetzt wird, und
- Reduktion des Oxids zum Metall.

4. Verfahren nach Anspruch 3, in dem das Gemisch eine Lösung oder Dispersion des Salzes in einem wässrigen oder organischen Lösungsmittel ist.

5. Verfahren nach Anspruch 4, in dem die Lösung eine Salzkonzentration, berechnet als Mole des entsprechenden Metalls, zwischen 0,01 M und 2 M aufweist.

6. Verfahren nach einem beliebigen der Ansprüche 3 bis 5, in dem die Kalzinierung durch Aussetzen an Luft bei einer Temperatur zwischen 100 und 450°C stattfindet.

7. Verfahren nach einem beliebigen der Ansprüche 3 bis 6, in dem die Reduktion durch Aussetzen gegenüber einer reduzierenden Atmosphäre bei einer Temperatur zwischen 300 und 700°C stattfindet.

8. Verfahren nach Anspruch 7, in dem die reduzierende Atmosphäre Ammoniak und/oder Wasserstoff aufweist.

9. Verfahren nach Anspruch 1 oder Anspruch 2, in dem der Schritt des Aufbringens des Metalls auf der Oberfläche des Substrates das Bringen des Substrates in Kontakt mit einer Lösung aus einem Lösungsmittel und dem Metall, das Unterziehen der Lösung einer Elektrolyse unter Verwendung des Substrates als Kathode und ein anschließendes Verdampfen des Lösungsmittels vorsieht.

10. Verfahren nach Anspruch 1 oder Anspruch 2, in dem der Schritt des Aufbringens des Metalls auf der Oberfläche des Substrates durch Sublimation des Metalls unter Hochvakuum stattfindet.

11. Verfahren nach Anspruch 1 oder Anspruch 2, in dem der Schritt des Aufbringens des Metalls auf der Oberfläche des Substrates durch das Aufbringen eines metallorganischen Vorläufers auf das Substrat stattfindet, der für eine Zersetzung empfänglich ist, wodurch das Metall gebildet wird.

12. Verfahren nach einem beliebigen der vorhergehenden Ansprüche, in dem die Komponente des Gases, von der das Molekül wenigstens ein einziges Kohlenstoffatom enthält, aus der Gruppe ausgewählt ist, die aus den aromatischen und aliphatischen Kohlenwasserstoffen vorzugsweise Ethylen, Methan und Acetylen -Kohlendioxid, Kohlenmonoxid und Gemischen von diesen besteht.

13. Verfahren nach Anspruch 12, in dem das Gas ferner Wasserstoff und/oder Stickstoff enthält.

14. Verfahren nach einem beliebigen der vorhergehenden Ansprüche, in dem nach Vollendung der Synthese von Kohlenstoff-Nanoröhren und/oder -Nanofasern das auf dem Substrat verbleibende Metall entfernt wird.

15. Verfahren nach einem beliebigen der vorhergehenden Ansprüche, in dem vor dem Aufbringungsschritt das Substrat einer Vorbehandlung unterzogen wird, die den Zweck der Entfernung von Oberflächenverunreinigungen und/oder der Erhöhung des Oberflächenbereiches hat.

16. Verfahren nach einem beliebigen der vorhergehenden Ansprüche, in dem das Substrat vom Film-, Partikel- oder Fasertyp ist.

17. Verfahren nach Anspruch 16, in dem das partikelartige Substrat durch Granulat und/oder Pulver gebildet ist, die eine mittlere Teilchengröße zwischen 0,001 und 5 mm aufweisen.

18. Verfahren nach Anspruch 16, in dem das faserartige Substrat ein zweidimensionales Substrat, wie beispielsweise Fließstoff, orthogonales Gewebe, unidirektionales Gewebe, multiaxiales Gewebe, bandartiges Gewebe, geflochtenes Gewebe, Cordgewebe, Jersey-Stoff mit Kette und Schuss, eine Kombination aus verschiedenen zweidimensionalen Substraten, um so ein dreidimensionales Substrat zu bilden, oder ein dreidimensionaler Stoff ist.

19. Verfahren nach einem beliebigen der vorhergehenden Ansprüche, in dem das Polymersubstrat auf der Oberfläche, von der die Kohlenstoff-Nanoröhren und/oder -Nanofasern synthetisiert worden sind, einer Pyrolyse bei einer Temperatur von mehr als 800°C unterzogen wird, so dass das Substrat in Graphit umgewandelt wird, um einen Kohlenstoff/Kohlenstoff-Verbundwerkstoff zu schaffen.

20. Verfahren nach Anspruch 19, in dem dem Pyrolyseschritt ein Schritt zum Entfernen des aus den vorhergehenden Schritten verbleibenden Metalls vorausgeht und/oder folgt.

## Revendications

1. Procédé de synthèse de nanotubes et/ou nanofibres de carbone à la surface d'un substrat polymère choisi dans l'ensemble formé par les polybenzoxazoles, polybenzimidazoles, polyimides et polyaramides, et les mélanges de ces polymères, lequel procédé comprend les étapes consistant à :
- déposer à la surface du substrat au moins un métal appartenant à l'un des groupes Ib à VIIIb de la classification périodique des éléments, lequel métal présente des propriétés catalytiques pour la formation et la croissance des nanotubes et/ou nanofibres de carbone,
- et mettre le substrat en contact avec un gaz comprenant au moins un composant dont la molécule contient au moins un atome de carbone, à une température de 400°C à 900°C, de manière à effectuer la synthèse de nanotubes et/ou nanofibres de carbone à la surface du substrat polymère.

2. Procédé conforme à la revendication 1, pour lequel le métal est choisi dans l'ensemble constitué par les métaux fer, cobalt, nickel, ruthénium, rhodium, palladium, osmium, iridium et platine, et les combinaisons de ces métaux.

3. Procédé conforme à l'une quelconque des revendications précédentes, dans lequel l'étape consistant à déposer le métal à la surface du substrat comporte, dans l'ordre, les opérations suivantes :
- imprégnation du substrat avec un mélange d'un solvant et d'un sel du métal,
- évaporation du solvant hors du substrat, qui reste imprégné par le sel,
- calcination du substrat, de manière à transformer le sel en l'oxyde correspondant,
- et réduction de l'oxyde en métal.

4. Procédé conforme à la revendication 3, dans lequel le mélange est une solution ou une dispersion du sel dans un solvant aqueux ou organique.

5. Procédé conforme à la revendication 4, dans lequel la solution présente une concentration de sel, exprimée en moles du métal correspondant, de 0,01 à 2 M.

6. Procédé selon l'une quelconque des revendications 3 à 5, dans lequel la calcination est réalisée par exposition à l'air, à une température de 100°C à 450°C.

7. Procédé selon l'une quelconque des revendications 3 à 6, dans lequel la réduction est réalisée par exposition à une atmosphère réductrice, à une température de 300°C à 700°C.

8. Procédé conforme à la revendication 7, dans lequel l'atmosphère réductrice comprend de l'ammoniac et/ou de l'hydrogène.

9. Procédé conforme à la revendication 1 ou la revendication 2, dans lequel l'étape consistant à déposer le métal à la surface du substrat comporte le fait de mettre le substrat en contact avec une solution du métal dans un solvant, soumettre cette solution à une électrolyse en utilisant le substrat comme cathode, puis évaporer le solvant.

10. Procédé conforme à la revendication 1 ou la revendication 2, dans lequel l'étape consistant à déposer le métal à la surface du substrat est réalisée par sublimation du métal sous vide poussé.

11. Procédé conforme à la revendication 1 ou la revendication 2, dans lequel l'étape consistant à déposer le métal à la surface du substrat est réalisée par distribution sur le substrat d'un précurseur organométallique qui est susceptible de se décomposer en donnant le métal.

12. Procédé conforme à l'une quelconque des revendications précédentes, dans lequel le composant gazeux dont la molécule contient au moins un atome de carbone est choisi dans l'ensemble formé par les hydrocarbures aromatiques et les hydrocarbures aliphatiques - de préférence, éthylène, méthane et acétylène -, le dioxyde de carbone, le monoxyde de carbone et leurs mélanges.

13. Procédé conforme à la revendication 12, dans lequel le gaz contient également de l'hydrogène et/ou de l'azote.

14. Procédé conforme à l'une quelconque des revendications précédentes, dans lequel, une fois que la synthèse des nanotubes et/ou nanofibres de carbone est terminée, on élimine le métal qui est resté sur le substrat.

15. Procédé conforme à l'une quelconque des revendications précédentes, dans lequel, avant l'étape de dépôt, on soumet le substrat à un traitement préalable ayant pour objet d'éliminer les impuretés superficielles et/ou d'accroître la surface.

16. Procédé conforme à l'une quelconque des revendications précédentes, dans lequel le substrat est du type film, particule ou fibre.

17. Procédé conforme à la revendication 16, dans lequel le substrat particulaire est constitué de granulés et/ou de poudres dont les particules présentent une taille moyenne de 0,001 à 5 mm.

18. Procédé conforme à la revendication 16, dans lequel le substrat fibreux est un substrat bidimensionnel, tel que tissu non-tissé, tissu orthogonal, tissu unidirectionnel, tissu multiaxial, tissu rubané, tissu tressé, tissu câblé ou tissu jersey à chaîne et trame, une combinaison de plusieurs substrats bidimensionnels permettant de former un substrat tridimensionnel, ou un tissu tridimensionnel.

19. Procédé conforme à l'une quelconque des revendications précédentes, dans lequel le substrat polymère à la surface duquel ont été synthétisés les nanotubes et/ou nanofibres de carbone, est soumis à une pyrolyse à une température de plus de 800°C, ce qui permet de transformer le substrat en graphite et de produire ainsi un matériau composite carbone-carbone.

20. Procédé selon la revendication 19, dans lequel l'étape de pyrolyse est précédée et/ou suivie d'une étape conçue pour éliminer le reste du métal provenant des étapes antérieures.
